# EUROPEAN PATENT APPLICATION

(11) **EP 3 326 940 A2**
(43) Date of publication of application: **30.05.2018**
(21) Application number: 17204048.7
(22) Date of filing: 28.11.2017
(51) Int. Cl.: B65G 47/244, G01V 8/20

(54) **A CONVEYOR SYSTEM COMPRISING AN ALIGNER FOR ALIGNING ITEMS**

(30) Priority: 28.11.2016 EP 16200944
(71) Applicant: BBHS A/S, 2640 Hedehusene (DK)
(72) Inventor: SVENNINGSEN, Ulrik, 2500 Valby (DK)
(74) Representative: Inspicos P/S

(57) **Abstract**

A conveyor system (100) for luggage or parcel items (102) comprises an item conveyor (104) for conveying the items (102) and an aligner (106) for aligning the items, the aligner (106) comprising alignment means (110,112), such as tilted or slanted belts capable of changing an initial orientation of an item (102) to a subsequent orientation of the item (102) while the item is being conveyed along a general conveying direction (108) of the aligner (106). A control system is provided for controlling the first and second conveyor elements (110; 112) which are arranged alongside each other and capable of simultaneously engaging an item engaging surface of the item, and individually controllable by the control system to convey at individual speeds to effect rotation of the item (102) around an upright axis.

## Description

### Technical field

The present invention relates to a conveyor system for handling of luggage or parcel items, for example at airports or parcel sorting and distribution facilities, the conveyor system comprising an aligner for aligning items conveyed by the conveyor system.

### Background of the invention

Various systems are known for transporting, sorting and storing various items and goods, including luggage and parcel items. Such systems are usually tailored to meet specific requirements set by the nature, size and weight of the items, as well as requirements regarding sorting, transport distances and speed of transportation.

One specific field of interest of the present application is the field of transportation and storage of luggage or parcel items in airports. In most airports, checked-in luggage is usually conveyed from a plurality of check-in counters to a central luggage conveying and/or sorting apparatus, referred to herein also as a principal conveyor, at which each luggage item is sorted according to its destination. Such conveying and/or sorting apparatus normally comprises a plurality of discharge units, in each of which luggage items destined for a particular aircraft are accumulated. The luggage items are then manually loaded onto carts or trolleys, by means of which the items are transported to the aircraft. The carts or trolleys may be self-propelled, or they may be attachable to a propelling unit (or tractor), which may be arranged to pull a plurality of trolleys or carts coupled together to form a train. Likewise parcels being sorted are typically discharged from a sorting conveyor into a plurality of collecting stations, each of which is designated for a particular destination. From the collecting stations, the parcels are transported in trollies, carts, containers, cages or bins to an aircraft.

The dimensioning of the various elements of the system such as, e.g., the principal conveyor, discharge units, carts or trolleys or collecting stations depends on the dimensions of the items handled by the system. It may however also depend on the orientation of the items so that two equally dimensioned items may take up different amounts of space on an element of the system if they are oriented differently. Accordingly, to optimize the dimensioning of the elements of the system, a need for controlling the orientation of the items exists.

### Summary of the invention

In a first aspect, the invention provides a conveyor system for luggage or parcel items, the conveyor system comprising an item conveyor for conveying the items and an aligner for aligning the items, the item conveyor being arranged to convey the items onto the aligner, wherein the aligner comprises alignment means capable of changing an initial orientation of an item to a subsequent orientation of the item while the item is being conveyed along a general conveying direction of the aligner, the alignment means comprising at least a first conveyor element and a second conveyor element and a control system for controlling the first and second conveyor elements, wherein the first conveyor element and the second conveyor element are:
- arranged alongside each other;
- capable of simultaneously engaging an item engaging surface with the item; and
- individually controllable by the control system to convey at individual speeds.

In a second aspect, the invention provides a method of conveying luggage or parcel items by use of a conveyor system, the conveyor system comprising an item conveyor for conveying the items and an aligner for aligning the items, the aligner comprising at least a first conveyor element and a second conveyor element and a control system for controlling the first and second conveyor elements, the method comprising the steps of:
- the item conveyor conveying an item in an initial orientation onto the aligner;
- engaging an item engaging surface of each of the first and second alignment elements with the item; and
- the control system individually controlling the speed of first and second conveyor elements to enable change of the initial orientation to a subsequent orientation.

Thanks to the first and second conveyor elements and the control system of the conveyor system, the system is able to change the initial orientation of the item to the subsequent orientation of the item. The subsequent orientation of the item may be an orientation allowing the item to take up less space in remaining elements of the conveyor system. For example, the initial orientation may be an orientation, in which edges of the item extend diagonally, i.e. at an acute angle, relative to the conveyor and its conveying direction (which may preferably coincide with the general conveying direction of the aligner), and the subsequent orientation may be an orientation in which the item is oriented with its edges essentially parallel or essentially perpendicular to a conveying direction of the conveyor. In general, the subsequent orientation may be a predetermined orientation. For example, the control system of the conveyor system may be configured to determine the initial orientation of the items at the aligner or upstream thereof, and, if the initial orientation is different from the predetermined orientation, to control the first and second alignment elements in such a way as to change the orientation of the item into the predetermined orientation.

Accordingly, embodiments of the invention allow for optimization of dimensioning of at least parts of the remaining elements of the conveyor system. This may further allow for optimization of the cost of the conveyor system and/or the amount of space required by the conveyor system.

The first and second conveyor elements may comprise individually controllable conveyor belts and/or individually controllable rolling elements arranged to impart different speeds and/or forces in different directions onto respective portions of a single surface of the item, so as to thereby cause rotation of the item relative to the aligner and thus relative to the conveyor around an upright axis.

In order to change the initial orientation to the subsequent orientation, the control system may change the conveying speed of the first conveyor element relative to that of the second conveyor element. In that case, the portion(s) of the item engaging the first conveyor element may move at a different speed than the portion(s) of the item engaging the second conveyor element. Accordingly, the aligner may be able to change the initial orientation of the item to the subsequent orientation.

The first and second conveyor elements may be arranged in a common horizontal plane with their respective item engaging surfaces facing upwardly. In that way, the item may be pulled towards the item engaging surfaces by gravity. The item engaging surfaces of the first and second conveyor elements may form a flat horizontal cross section or a V-shaped cross section. In one embodiment, the first and second conveyor elements both have essentially planar upper surface, which are inclined towards each other so as to form a V-shape when seen in cross section in a vertical plane transverse to the general conveying direction of the conveyor.

The initial orientation of the item may be determined at a point upstream of the aligner by detection means of the conveyor system arranged at said upstream point. The initial orientation may also be derived from some previously determined orientation of the item. For instance, if the previously determined orientation and the way this previously determined orientation commonly changes before reaching the aligner are input in the control system, the control system may derive the initial orientation from this input. The initial orientation may also be determined at or near the aligner. Particularly, the initial orientation may be determined by detection means of the aligner.

The initial orientation may be determined and then stored in the control system. The control system may then control the first and second conveyor elements to change the initial orientation to the subsequent orientation based on the stored initial orientation and a predefined control scheme. The aligner is then able to change the initial to the subsequent orientation without a need for continuously monitoring the orientation. Accordingly, this may increase the throughput of the aligner.

The subsequent orientation of the item may be determined downstream of the aligner. In this case, the determined subsequent orientation may then preferably serve as a basis for updating and improving a predefined control scheme of the control system. The subsequent orientation of the item may also be determined at or near the aligner. Particularly, the subsequent orientation may be determined by detection means of the aligner.

In embodiments, the conveyor system comprises first detection means capable of detecting the initial orientation of the item and/or second detection means capable of detecting the subsequent orientation of the item.

In case the conveyor system comprises first detection means capable of detecting the initial orientation of the item, the aligner may be able to determine the initial orientation with increased accuracy because this may decrease the distance the item travels between having its orientation determined and having its orientation changed. Further, when the aligner comprises the first detection means, retrofitting an existing conveyor system with the aligner may be done more conveniently.

In case the conveyor system comprises the second detection means capable of detecting the subsequent orientation of the item, the aligner is able to reduce the distance the item travels between having its orientation changed to the subsequent orientation and having the subsequent orientation determined. Accordingly, if the subsequent orientation of the item is to be changed, the distance the item has to travel to get its orientation changed is reduced. Further, when the aligner comprises the second detection means, retrofitting an existing conveyor system with the aligner may be done more conveniently.

In embodiments, the first detection means are different from the second detection means. This allows the first and second detection means to be arranged separately. The first detection means may, e.g., be arranged just upstream of the first and second conveyor elements and the second detection means may, e.g., be arranged just downstream of the firs and second conveyor elements. This may increase the efficiency and/or accuracy of the aligner.

In embodiments, the first detection means and/or the second detection means comprise at least one laser emitter arranged to illuminate a laser pattern onto at least one of the conveyor elements of the aligner and the items engaged by the at least one conveyor element, and at least one camera for capturing said laser pattern, wherein the control system is configured to perform image analysis of the laser pattern captured by the at least one camera in order to detect the initial and/or subsequent orientation of the item.

In this case, the initial and/or subsequent orientation of the item may be determined relatively quickly and relatively accurately. An item being hit by at least parts of the laser pattern may change the laser pattern as observed by the at least one camera. Further, the at least one laser emitter may be kept at standstill in contrast to items being conveyed past it. In this case, an item moving past the laser emitter may change the laser pattern as observed by the a least one camera dynamically as it is conveyed past the laser pattern. This dynamical change along with the conveying speed may be used to derive an orientation of the item in manner taking advantage of the item being in motion when having its orientation determined.

In embodiments, the at least one laser emitter is configured to emit a laser line or a laser plane, the laser line or plane extending transversely to the general conveying direction of the aligner. The laser line or laser plane extending transversely to the general conveying direction may allow for relatively simple image analysis for determining the initial and/or subsequent orientation. For example, a square item conveyed past the laser pattern in an orientation with the sides of the item being parallel with the general conveying direction will intersect the laser line or plane with a full side simultaneously. If the square item is not parallel with the conveying direction, a corner of the item with first intersect the laser line or laser plane.

The camera may be arranged such that a first line intersecting a focal centre of a lens of the camera and a centre of the laser pattern formed by the laser on the conveying element forms an acute angle with the laser line or laser plane. In this case, the two dimensional representation of the pattern on the item conveyor and/or the item contains information on the shape and orientation of the item. More particularly, if part of the laser line or laser plane is hitting the item, this part of the laser line or laser plane will be observed as being displaced with respect to the part of the laser line or laser plane not hitting the item. Such information is able to form of the basis determining the orientation of the item. In general, the camera may, for example, be arranged offset from the laser emitter.

The acute angle may be between 5 and 65 degrees, more particularly between 15 and 60 degrees, more particularly between 25 and 50 degrees.

In order to increase throughput of the aligner, the control system may be configured to control the first and/or second conveyor element to convey faster than the item conveyor in order to change the initial orientation of the item to the subsequent orientation.

The control system may configured to compare the initial orientation with a first set of predetermined orientations, and/or compare the subsequent orientation with a second set of predetermined orientations, and to control the first and second conveyor elements according to a first predefined control scheme if the initial orientation matches the first set of predetermined orientations and/or according to a second predefined control scheme if the subsequent orientation matches the second set of predetermined orientations.

In one embodiment, the first control scheme comprises individually controlling the speed of the first and second conveyor elements to change the orientation of the item from the initial orientation to a desired orientation.

In one embodiment, the second control scheme comprises individually controlling the speed of the first and second conveyor elements to change the orientation of the item from the subsequent orientation to the desired orientation.

In this case, there is no need for continuously monitoring the orientation of the item and the control system is configured to operate at least in part on the basis of predetermined orientations and action schemes. These effects together and on their own may increase the throughput of the aligner and/or reduce the costs of the aligner.

In embodiments, the second predefined control scheme includes changing the subsequent orientation to a third orientation being different from the initial orientation and the subsequent orientation if the subsequent orientation matches the second set of predefined orientations. This allows the control system to change the subsequent orientation if it is determined that the subsequent orientation does not come within a desired set of orientations for the item. Accordingly, present embodiments provide means of improving the reliability and/or accuracy of the aligner.

In embodiments, the item engaging surfaces of the first and second conveyor elements are tilted towards each other to form a V-shape when seen in cross section. In this case, the part of an item engaging each of the item engaging surfaces may be reduced. More particularly, it may increase the likelihood of sides or corners of the item are being engaged by the item engaging surfaces of the first and second conveyor elements. Accordingly, the aligner may change the orientation of the item in relatively efficient and reliable manner.

In order to facilitate and improve further processing of the item in, e.g., a sorting facility downstream or upstream of the alignment means, the control system may comprise control elements for controlling such sorting facility or for communicate with an external control system for controlling such sorting facility. The control of the sorting facility may thus be carried out on the basis of data acquire by the detection means, including optionally information indicating if the item is arranged in a tote or data indicative of other item characteristics. Further, the weight of the item may be acquired by, e.g. control elements of the control system for controlling the item conveyor and/or by a separate weighing unit incorporated in a conveyor element, such as in the item conveyor.

The first and second conveyor elements may each comprise at least one straight conveyor element section. Thereby, a simple, inexpensive and efficient aligner may be provided.

The aligner may comprise a housing with an open inlet end and an open outlet end, the housing forming at least part of a tunnel enclosing at least part of the first and second conveyor elements and arranged to limit the amount of light entering the tunnel and/or escaping the tunnel. This may optimize performance of detection means arranged inside the tunnel. Particularly, in case of optical detection means comprising, e.g., at least one laser emitter and/or at least one camera may operate with increased performance if the tunnel shields the detection means from at least part of light originating from the surroundings of the aligner. Further, the tunnel may at least partly shield personal or machines operating in the vicinity of the aligner from light emitted by the laser emitter.

In embodiments, the open inlet end and open outlet end are each closed of by a curtain, and wherein each curtain is arranged to limit the amount of light entering the tunnel and/or escaping the tunnel, and wherein each curtain is configured to allow items to pass it. This may further increase performance of detection means within the tunnel and further shield personal and machines in the vicinity of the aligner.

In embodiments, the conveyor system further comprises a centring device arranged to transversely displace items on the item conveyor, wherein the centring device comprises:
- sensors for sensing an item on the item conveyor; and
- at least two pusher elements for engaging an item on the conveyor, the pusher elements being arranged on opposing sides of the item conveyor, and the pusher elements being drivable at least in a direction transverse a conveying direction defined by the item conveyor.

In embodiments, the conveyor system comprises a centring device, the centring device comprising a sensor, two pusher elements arranged on opposing sides of the item conveyor, wherein the method comprises the steps of:
- the sensor sensing an item on the item conveyor;
- the pusher elements being driven in a direction transverse a conveying direction of the item conveyor towards the centreline of the item conveyor; and
- the at least two pusher elements engaging the item to push it towards the centreline of the item conveyor.

Thanks to the centring device, an item sensed by the sensor to be in the vicinity of the pusher elements is able to transversely displaced by the pusher elements on the item conveyor towards a centreline defined between the first and second item conveyors adjacent the item conveyor. Accordingly, items conveyed onto the first and second item conveyors of the aligner may engage the first and second item conveyors more evenly. Moreover, when the item has been transversely displaced towards the centreline defined by the first and second item conveyors, it is generally more likely that the weight of the item is more evenly distributed between the first and second item conveyors, than if the item had not been transversely displaced. This improves the capability of the first and second item conveyors to simultaneously engage the item and change the items orientation by individually controlling the speed of the first and second item conveyors. Further, by effecting transverse displacement of the item on the item conveyor by engagement with the pusher elements from opposing sides of the item conveyor, more effective transverse movement of the item is allowed. For instance, if transverse displacement of the item relative to the centreline between the first and second conveyor elements was to be effected by transversely displacing the item conveyor supporting the item, the transverse displacement speed would be limited by the likelihood of the item rolling over or even rolling off the item conveyor.

In embodiments, an item engaging surface of the item conveyor defines a first coefficient of friction, and item engaging surfaces of the pusher elements define a second coefficient of friction, wherein the first coefficient of friction is larger than the second coefficient of friction.

The relatively low coefficient of friction on the item engaging surfaces of the pusher elements decreases the likelihood of the possibly stationary pusher elements decreasing the conveying speed of the item on the item conveyor, which in turn could lead to items colliding and/or possibly clogging the centring device. It may further decrease wear on the items and/or pusher elements caused by the pusher elements engaging the items.

In embodiments, the pusher elements comprise vertically arranged driveable conveyor belts for engaging the item on the item conveyor. The driveable conveyor belts allow for them to be driven at a speed similar to that of the item conveyor. In this case, the pusher elements may engage items on the item conveyor with a minimised effect on the items conveying speed on the item conveyor, and associated minimised risk of item collision and/or items clogging up the centring device.

In embodiments, the centring device comprises third detection means for detected a force exerted on each of the pusher elements. This allows the pusher elements to be controlled based on a measurement of the force exerted on the pusher elements. Accordingly, the pusher elements are allowed to stop and retract when a threshold force is reached, for effective operation of the pusher elements with a minimum of wear on the pusher elements and items on the item conveyor.

The third detection means may comprise touch sensors configured to sense forces exerted on the item engaging surfaces of the pusher elements. In one embodiment, the third detection means comprises sensors arranged behind vertically arranged conveyor belts of the pusher elements, the sensors being able to sense the force exerted on the vertically arranged conveyor belts.

In one embodiment, the transverse movement of each of the pusher elements are driven by an individual electric motor, wherein the third detection means comprises a motor load sensor for each motor. This allows for particularly simple, reliable and convenient measurements of the force exerted on each pusher element.

In embodiments, the method comprises the steps of:
- detecting the initial orientation using first detection means;
- comparing the initial orientation with a first set of predetermined orientations;
- if the initial orientation matches the first set of predetermined orientations, the control system operating according to a first predefined control scheme to individually control the speed of first and second conveyor elements to change the initial orientation to the subsequent orientation.

The steps according to present embodiments may increase the throughput at which the conveyor system may be operated, by operating the conveyor system based on predetermined orientations and a predefined control scheme.

In embodiments, the method comprises the steps of:
- detecting the subsequent orientation using second detection means;
- comparing the subsequent orientation with a second set of predetermined orientations;
- if the subsequent orientation matches the second set of predetermined orientations, the system operating according to a second predefined control scheme to individually control the speed of first and second conveyor elements to change the subsequent orientation to a third orientation.

The steps according to present embodiments may increase the throughput at which the conveyor system may be operated, by operating the conveyor system based on predetermined orientations and a predefined control scheme. They further allow the conveyor system to be operated with a scheme for adjusting the subsequent orientation improving the reliability of the conveyor system.

### Description of the drawings

Embodiments of the invention will now be further described with reference to the drawings, wherein:
Figs. 1 - 4 illustrate an embodiment of a conveyor system according to the invention;
Figs. 5 and 6 illustrate the embodiment of Figs. 1 - 4 including its control system; and
Figs. 7 - 12 illustrate an embodiment of a conveyor system comprising a centring device according to the invention.

The conveyor system 100 shown in the drawings comprises an item conveyor 104, by which items 102, such as parcel or luggage items 102 are conveyed to an aligner 106 for changing an orientation of the items 102 relative to a general conveying direction 108 of the item conveyor 104 and/or of the aligner 106. The aligner 106 comprises first and second conveyor elements 110, 112 in the form of tilted or slanted conveyor elements arranged alongside each other to form a V-shape when seen in cross-section.

The conveyor system 100 further comprises a first laser emitter 116 arranged at a distance from, and preferably above, the item conveyor 104, and second laser emitters 118, 122 arranged at a distance from, and preferably above, the aligner 106, notably near a downstream end section thereof. The first and second laser emitters 116, 118, 122 are arranged to illuminate laser patterns onto the item conveyor 104 and the conveyor elements 110, 112 of the aligner 106, respectively. First and second cameras 114, 120 arranged offset from the first and second laser emitters 116, 118, 122 are provided for capturing laser patterns reflected by the items 102, item conveyor 104, and the first and second conveyor elements 110, 112 of the aligner 106. A housing 124 forming at least a part of a tunnel is provided for shielding off and/or otherwise protecting the item conveyor 104 and the aligner 106, notably with a view to excluding portions of surrounding light to enhance optical light contrasts of laser light reflected by the item 102, the item conveyor 104 and/or the first and second conveyor elements 110, 112. Operation of the conveyor elements 110, 112 is controlled by control system 126.

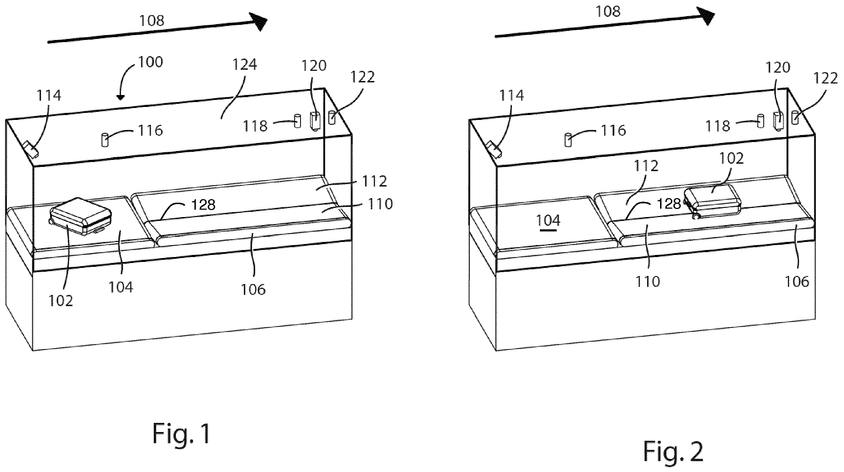

In operation, the orientation and optionally further the size of an incoming item 102 is detected by the first camera 114 on the basis of light emitted by the first laser 116 and reflected by an upper surface of the item conveyor 104 and an upper surface of the item 102. The weight of the item may optionally further be acquired by means of a weighing unit (not shown). On the basis of the detected image, the control system 126 defines an operating scheme for the tilted conveyor elements 110, 112 of the aligner 106. More specifically, the conveyor elements 110, 112 are individually controllable by the control system 126 at individual speeds, so that the item's orientation relative to the conveyor elements 110, 112 can be altered when both of the conveyor elements 110, 112 simultaneously engage a portion of a bottom surface of the item 102. For example, the initial item orientation shown in Fig. 1 may be changed into the subsequent item orientation shown in Fig. 2 by operating the first conveyor element 110 at a higher speed than the second conveyor element 112, while the item 102 rests on the conveyor elements 110, 112, with one portion of its bottom surface resting on the first conveyor element 110 and another portion of its bottom surface resting on the second conveyor element 112.

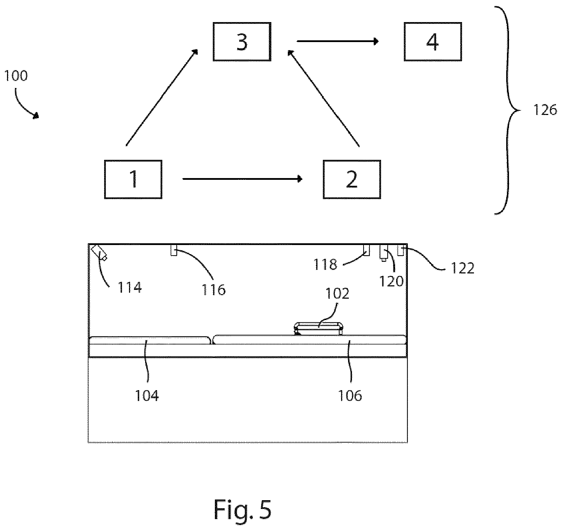

Fig. 5 illustrates an embodiment of the control system, in which a central processing unit (CPU) 1 is provided for receiving input from the first and/or camera 114, 116 and optionally also from control elements (not shown) controlling the item conveyor 104 and/or the first and second conveyor elements 110, 112. On the basis of such inputs, the initial orientation and optionally also size and/or weight of the item 102 may be determined or estimated. A sub-PLC (programmable logic controller) 2 determines a control scheme for operation of the first and second conveyor elements 110, 112 for changing the orientation of the item 102 from initial orientation shown in Fig. 1 into the subsequent orientation shown in Fig. 2. CPU 1 and sub-PLC 2 communicate with a main PLC 3, which in turn communicates with a further control element 4 provided, e.g., for communication of sorting or other item-related data to further control elements of the control system 126 or external control units.

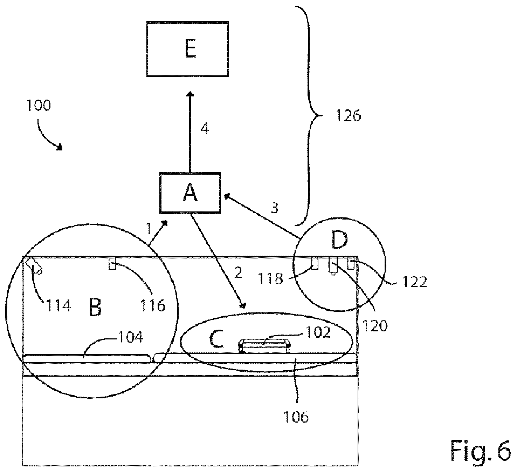

In the control system 126 shown in Fig. 6, the first camera 114 and optional belt motor control elements generally denoted B communicate (as indicated by arrow 1) to the CPU A. Once the CPU A has calculated a control scheme for the first and second conveyor elements 110, 112 of the aligner 106 to effect (as indicated by arrow 2) a change of orientation of the item 102 as described above, the second cameras 118, 122, forming part of a camera/laser setup generally denoted D, communicate (as indicated by arrow 3) data indicative of an orientation of the item 102 at C to the CPU A. As indicated by arrow 4, CPU A communicates data to further control element E provided, e.g., for communication of sorting or other item-related data to further control elements of the control system 126 or external control units.

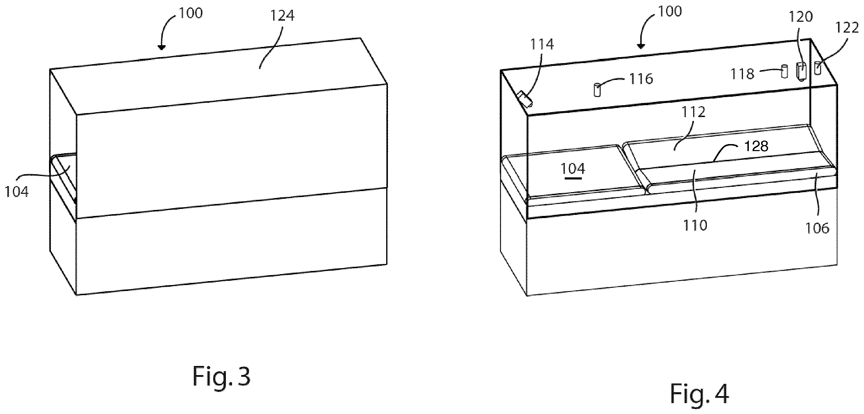

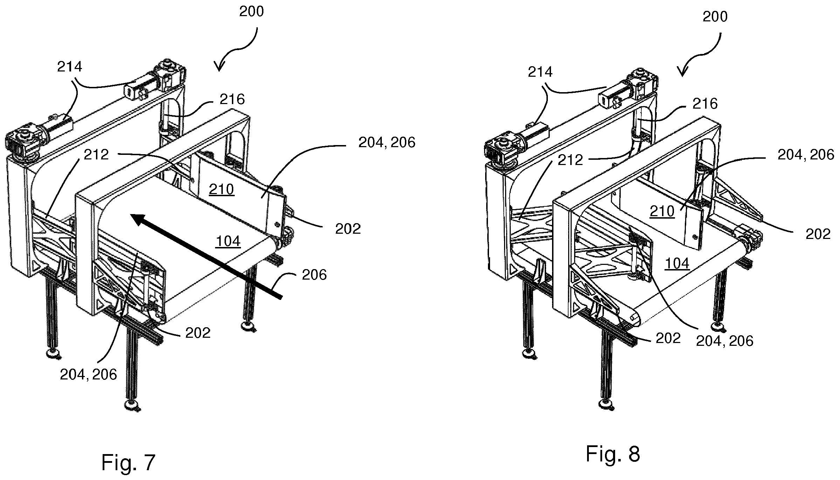

Fig. 7 illustrates a centring device 200 according to an embodiment of the invention. The centring device 200 is arranged just upstream of the aligner 106 to transversely displace an item 102 on the item conveyor 104 before the item 102 is conveyed onto the first and second conveyor elements 110, 112 of the aligner 106. The item 102 is displaced towards a centreline 128 (marked in Figs. 1, 2 and 4) defined between the first and second conveyor elements 110, 112. The centring device 200 comprises sensors 202 in the form of photo sensors for sensing an item 102 on the item conveyor 104. As an item 102 is sensed by the sensors 202, pusher elements 204 are activated and displaced towards the centreline of the item conveyor 104 coinciding with the centreline 128 between the first and second conveyor elements 110, 112.

In the embodiment illustrated in Fig. 7, the pusher elements 204 each comprises a pusher plate 208 for engaging items 102 on the item conveyor 104. Item engaging surfaces 210 of the pusher plates 208 define a second coefficient of friction smaller than a first coefficient of friction of an item engaging surface of the item conveyor 104. The relatively low coefficient of friction on the item engaging surfaces 210 of the pusher plates 208 decreases the likelihood of the pusher plates 208 decreasing the conveying speed of the item 102 on the item conveyor 104. The pusher plates 208 are coupled to pivot arms 212, which in turn are coupled to individual electric motors 214 via shafts 216. Accordingly, the torque applied by the electric motors 214 is transferred to the pivot arms 212 effectuating transverse movement, as well movement along the item conveyor 104, of the pusher plates 208 as illustrated in Fig. 8. Third detection means of the centring device 200 in the form of motor load sensors enables measurement of the force exerted on the pusher plates 208. Accordingly, the pusher plates 208 are stopped and retracted when a threshold force is reached and the item 102 has approached the centreline 128 of the aligner 106.

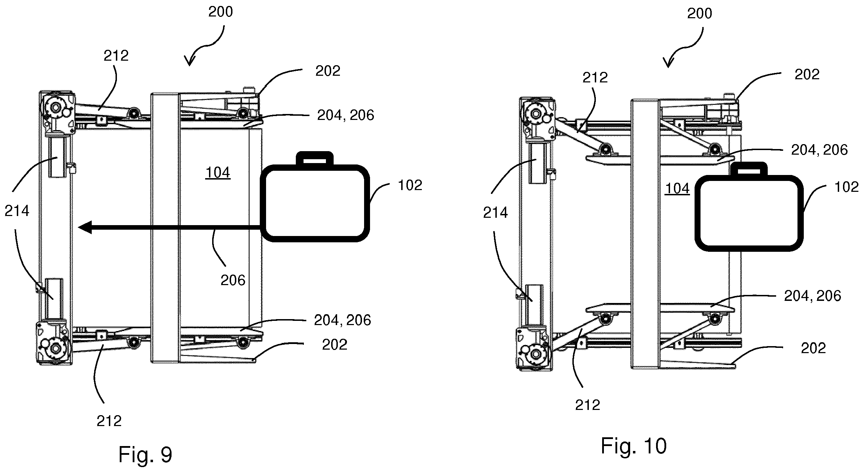

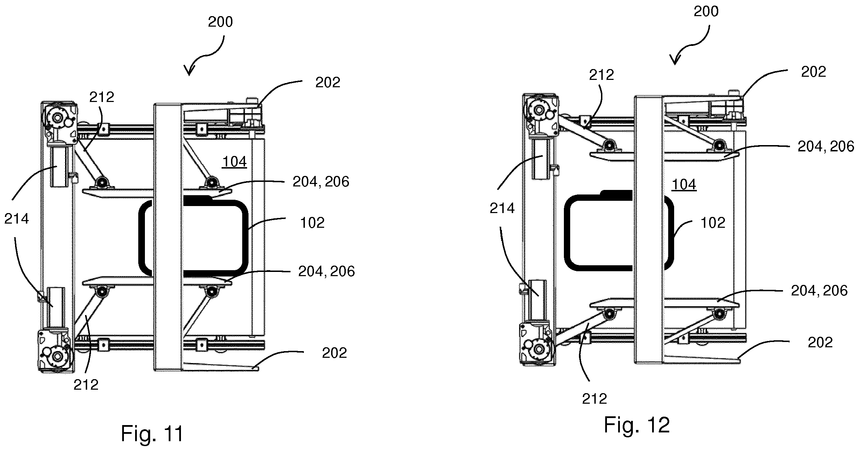

The functionality of the centring device 200 according to an embodiment of the invention is further illustrated in Figs. 9-12. In Fig. 9 the sensors 202 in the form of photo sensors sense an item 102 on the item conveyor 104. This activates the electric motors 214 causing movement of the pusher elements 204 towards the item 102 as illustrated in Fig. 10. In Fig. 11 both pusher plates 208 are engaged with the centred item 102 and the threshold force is reached. In Fig. 12 the pusher elements 204 are retracting while the item 102 is conveyed onwards and onto the first and second conveyor elements 110, 112 of the aligner 106.

## Claims

1. A conveyor system for luggage or parcel items, the conveyor system comprising an item conveyor for conveying the items and an aligner for aligning the items, the item conveyor being arranged to convey the items onto the aligner, wherein the aligner comprises alignment means capable of changing an initial orientation of an item to a subsequent orientation of the item while the item is being conveyed along a general conveying direction of the aligner, the alignment means comprising at least a first conveyor element and a second conveyor element and a control system for controlling the first and second conveyor elements, wherein the first conveyor element and the second conveyor element are:
- arranged alongside each other;
- capable of simultaneously engaging an item engaging surface with the item; and
- individually controllable by the control system to convey at individual speeds.

2. A conveyor system according to claim 1, wherein the conveyor system comprises first detection means capable of detecting the initial orientation of the item and/or second detection means capable of detecting the subsequent orientation of the item.

3. A conveyor system according to claim 2, wherein the first detection means and/or the second detection means comprise at least one laser emitter arranged to illuminate a laser pattern on at least one of the conveyor elements of the aligner and the items engaged by the at least one conveyor element, and at least one camera for capturing said laser pattern, and wherein the control system is configured to perform image analysis of the laser pattern captured by the at least one camera in order to detect the initial and/or subsequent orientation of the item.

4. A conveyor system according to claim 3, wherein the at least one laser emitter is configured to emit a laser line or a laser plane, the laser line or plane extending transversely to the general conveying direction of the aligner.

5. A conveyor system according to claim 3 or 4, wherein the camera is arranged such that a first line intersecting a focal centre of a lens of the camera and a centre of the laser pattern formed by the laser on the conveying element forms an acute angle with the laser line or laser plane.

6. A conveyor system according to any of the preceding claims, wherein the control system is configured to compare the initial orientation with a first set of predetermined orientations, and/or compare the subsequent orientation with a second set of predetermined orientations, and to control the first and second conveyor elements according to a first predefined control scheme if the initial orientation matches the first set of predetermined orientations and/or according to a second predefined control scheme if the subsequent orientation matches the second set of predetermined orientations.

7. A conveyor system according to any of the preceding claims, wherein the item engaging surfaces of the first and second conveyor elements are tilted towards each other to form a V-shape when seen in cross section.

8. A conveyor system according to any of the preceding claims, wherein the aligner comprises a housing with an open inlet end and an open outlet end, the housing forming at least part of a tunnel enclosing at least part of the first and second conveyor elements and arranged to limit the amount of light entering the tunnel and/or escaping the tunnel.

9. A conveyor system according to any of the preceding claims, wherein the conveyor system further comprises a centring device arranged to transversely displace items on the item conveyor, and wherein the centring device comprises:
- sensors for sensing an item on the item conveyor; and
- at least two pusher elements for engaging an item on the conveyor, the pusher elements being arranged on opposing sides of the item conveyor, and the pusher elements being drivable at least in a direction transverse a conveying direction defined by the item conveyor.

10. A conveyor system according to claim 9, wherein an item engaging surface of the item conveyor defines a first coefficient of friction, and item engaging surfaces of the pusher elements define a second coefficient of friction, and wherein the first coefficient of friction is larger than the second coefficient of friction.

11. A conveyor system according to claim 9 or 10, wherein the pusher elements comprise vertically arranged driveable conveyor belts for engaging the item on the item conveyor.

12. A conveyor system according to any of claims 9-11, wherein the centring device comprises third detection means for detected a force exerted on each of the pusher elements.

13. A conveyor system according to claim 12, wherein the transverse movement of each of the pusher elements are driven by an individual electric motor, and wherein the third detection means comprises a motor load sensor for each motor.

14. A method of conveying luggage or parcel items by use of a conveyor system, the conveyor system comprising an item conveyor for conveying the items and an aligner for aligning the items, the aligner comprising at least a first conveyor element and a second conveyor element and a control system for controlling the first and second conveyor elements, the method comprising the steps of:
- the item conveyor conveying an item in an initial orientation onto the aligner;
- engaging an item engaging surface of each of the first and second alignment elements with the item; and
- the control system individually controlling the speed of first and second conveyor elements to enable change of the initial orientation to a subsequent orientation.

15. A method according to claim 14, wherein the conveyor system comprises a centring device, the centring device comprising a sensor, two pusher elements arranged on opposing sides of the item conveyor, and wherein the method comprises the steps of:
- the sensor sensing an item on the item conveyor;
- the pusher elements being driven in a direction transverse a conveying direction of the item conveyor towards the centreline of the item conveyor; and
- the at least two pusher elements engaging the item to push it towards the centreline of the item conveyor.
